# EUROPÄISCHE PATENTSCHRIFT

(11) **EP 3 628 853 B1**
(45) Veröffentlichungstag und Bekanntmachung des Hinweises auf die Patenterteilung: **29.12.2021**
(21) Anmeldenummer: 18465580.1
(22) Anmeldetag: 28.09.2018
(51) Int. Cl.: F02D 9/04, F16K 1/32, F16K 11/04, F02M 26/66, F02M 26/69, F16B 2/22, F16B 7/04, F16B 21/18, F16B 21/20

(54) **VENTIL**
VALVE
SOUPAPE

(43) Veröffentlichungstag der Anmeldung: 01.04.2020
(73) Patentinhaber: Vitesco Technologies GmbH, 93055 Regensburg (DE)
(72) Erfinder: Petca, Eduard Cornel, 300693 Timisoara (RO)

(56) Entgegenhaltungen:
- EP-A2- 1 143 176
- WO-A1-2010/061509
- DE-A1- 1 675 575
- DE-A1-102008 037 019
- DE-A1-102015 122 379
- DE-C1- 19 539 921
- GB-A- 1 027 773
- JP-A- H11 324 823
- US-A1- 2003 098 074
- US-A1- 2011 017 934

## Beschreibung

Es wird ein Ventil zum Öffnen und Schließen einer Abgasleitung angegeben.

In Kraftfahrzeugen werden Ventile zum Öffnen und Schließen einer Abgasleitung eingesetzt. Wichtig für die Funktion solcher Ventile ist die Dichtheit, mit der das Ventil die Leitung verschließen kann. Gerade bei Gasen ist das Erreichen einer geringen Leckrate mit hohem Aufwand verbunden. Der Antrieb eines Stößels des Ventils wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel linear bewegt werden kann. Der Stößel ist hierzu axial geführt.

US 2003/0098074 A1 betrifft ein Ventil mit einer Ventilkammer, die zwischen einem Fluideinlass und einem Fluidauslass ausgebildet ist, und einem in der Ventilkammer angeordneten Ventilelement aus einem elastischen Element und einem unelastischen Element.

GB 1 027 773 betrifft eine Führung für ein Ventil oder eine andere Spindel weist ein Element auf, das aus einem flexiblen Material wie Nylon gebildet ist und eine integrale Konstruktion aufweist. Das Element ist allgemein ringförmig und weist einen ersten Außenumfangsabschnitt aufweist, der an dem Gehäuse befestigt ist, einen zweiten Umfangsabschnitt, der an der Spindel befestigt ist, und eine Vielzahl von Streifen, die die Umfangsabschnitte verbinden.

DE 10 2015 122 379 A1 betrifft ein Ventil, bei dem in einer ersten Stellung einer Ventilstange die Durchgangsöffnungen durch das Anliegen der festen Ventilschließglieder an den festen Ventilsitzen geschlossen sind, in einem ersten definierten Bewegungsabschnitt der Ventilstange die Durchgangsöffnung durch das flexible Element geschlossen ist und die festen Ventilschließglieder von den festen Ventilsitzen abgehoben sind und in einem an den ersten Bewegungsabschnitt anschließenden zweiten Bewegungsabschnitt der Ventilstange die Durchgangsöffnungen regelbar sind.

DE 195 39 921 C1 betrifft ein Ventil mit einem Gehäuse, einem Einlass, einem Auslass, zwei Ventilsitzen und zwei Ventiltellern.

Es ist wünschenswert, ein Ventil anzugeben, das einfach und zuverlässig ist.

Die Erfindung bezieht sich auf ein Ventil mit den Merkmalen des Anspruchs 1.

Das Ventil zum Öffnen und Schließen einer Abgasleitung eines Kraftfahrzeugs weist einen Gehäusekörper auf. Das Ventil weist einen in dem Gehäusekörper angeordneten Stößel auf. Der Stößel ist an einem ersten Ende mit einem Antrieb koppelbar. Der Stößel ist ausgebildet, entlang einer Längsachse des Stößels bewegt zu werden. Das Ventil weist einen im Gehäusekörper angeordneten Ventilsitz auf. Der Ventilsitz begrenzt eine Öffnung. Das Ventil weist einen Schließkörper auf, der mit dem Stößel verbunden ist. Der Schließkörper ist mittels einer Bewegung des Stößels zwischen einer Offenstellung und einer Schließstellung verstellbar. In der Offenstellung ist die Öffnung freigegeben. In der Schließstellung liegt der Schließkörper an dem Ventilsitz an und dichtet die Öffnung ab. Das Ventil weist ein Federelement auf. Das Federelement ist an dem Gehäusekörper fixiert. Das Federelement ist zudem an dem Schließkörper fixiert. Das Federelement ist ausgebildet, eine axiale Federkraft und eine radiale Federkraft auf den Schließkörper auszuwirken.

Das Federelement ist mit dem Gehäusekörper und dem Schließkörper verbunden, um den Schließkörper in Richtung der Schließposition vorzuspannen. Das Federelement zieht oder drückt den Schließkörper in Richtung hin zum Dichtsitz. Das Federelement ist elastisch genug, um ein Abheben des Schließkörpers vom Dichtsitz zum Öffnen des Ventils zu ermöglichen.

Beispielsweise wird der Schließkörper mittels des Antriebs und einer Stößelbewegung in die Offenstellung bewegt.

Zusätzlich wirkt das Federelement auch Kräfte in radialer Richtung aus. Das Federelement zieht oder drückt den Schließkörper in radialer Richtung. Insbesondere ist das Federelement ausgebildet, in mehreren Richtungen radiale Kräfte auszuwirken. Somit wird der Schließkörper beispielsweise zentriert. Der Schließkörper ist mittels des Federelements flexibel am Gehäusekörper abgestützt. Die Bewegung des Schließkörpers im Betrieb wird von dem Federelement axial und radial geführt. Dadurch wird auch die Bewegung des Stößels von dem Federelement radial und axial geführt. Somit ist es möglich, auf eine separate Lagerung des Stößels an einem dem ersten Ende abgewandten zweiten Ende zu verzichten. Im Vergleich zu herkömmlichen Ventilen für Abgasleitungen ist es dadurch möglich, die Anzahl der Bauteile zu reduzieren. Dadurch wird auch die Herstellung vereinfacht und dadurch günstiger. Zudem kann insgesamt ein kürzerer Stößel verwendet werden, was wiederum zu einem kompakteren und damit weniger fehleranfälligen Ventil führt.

Das Federelement ist an einer Außenseite des Gehäusekörpers fixiert. Somit ist eine einfache Herstellung möglich.

Gemäß einer Ausführungsform weist der Stößel eine Hülse auf. Der Schließkörper ist mit der Hülse verbunden. Der Stößel weist einen Schaft auf, der mit dem Antrieb koppelbar ist. Der Schaft ist teilweise in der Hülse angeordnet. Somit ist der Stößel aus zwei Einzelteilen zusammengesetzt, der Hülse und dem Schaft. Dies ermöglicht eine einfache Montage. Zunächst ist es möglich, den Schließkörper, das Federelement und den Gehäusekörper mit der Hülse zu montieren. Nachträglich kann diese Unterbaueinheit mit dem Schaft verbunden werden.

Gemäß zumindest einer Ausführungsform weist der Schaft ein Verbindungselement auf. Das Verbindungselement ermöglicht ein Einschieben des Schafts in die Hülse zur Montage. Das Verbindungselement hinterhakt die Hülse, um den Schaft mit der Hülse zu verbinden. Das Verbindungselement ist so ausgebildet, dass nach der Montage eine Selbsthemmung auftritt. Das Verbindungselement blockiert eine relative Bewegung entlang der Längsachse zwischen dem Schaft und der Hülse nach der Montage. Das Verbindungselement ist beispielsweise flexibel genug, um ein Einstecken des Schafts in eine erste Richtung in die Hülse zu ermöglichen. Ein Herausziehen des Schafts in eine der ersten Richtung entgegengesetzte zweite Richtung wird durch ein Verhaken und ein teilweises Eindringen des Verbindungselements in die Hülse verhindert.

Gemäß einer Ausführungsform ist das Federelement als Tellerfeder ausgebildet. Insbesondere ist das Federelement achsensymmetrisch oder punktsymmetrisch ausgebildet. Das Federelement ist insbesondere ausgebildet, dass in jede radiale Richtung in etwa die gleiche Kraft ausgewirkt wird.

Gemäß einer Ausführungsform weist das Federelement einen ersten Ring und einen zweiten Ring auf. Der erste Ring ist an dem Gehäusekörper fixiert und der zweite Ring ist an dem Schließkörper fixiert. Dadurch ist eine verlässliche und einfache Verbindung zwischen dem Federelement und dem Gehäusekörper sowie dem Schließkörper möglich.

Gemäß einer Ausführungsform ist das Federelement an dem Gehäusekörper und an dem Schließkörper jeweils mittels einer Schweißverbindung fixiert. Dies ermöglicht eine einfache und zuverlässige Verbindung.

Gemäß einer Ausführungsform endet der Stößel in der Schließposition an einem dem ersten Ende gegenüberliegenden zweiten Ende in der Öffnung. Der Stößel steht insbesondere an dem zweiten Ende nicht über den Gehäusekörper über. Somit ist im Vergleich zu herkömmlichen Ventilen ein verkürzter Stößel möglich. Die Führung des Stößels mittels des Federelements und des Schließkörpers ermöglicht, dass der Stößel an dem zweiten Ende nicht in einem separaten Lager geführt ist, das außerhalb des Gehäusekörpers angeordnet ist.

Gemäß einer Ausführungsform ist der Schließkörper an dem zweiten Ende mit dem Stößel verbunden. Der Stößel steht nicht oder nur unwesentlich über den Schließkörper vor in eine Richtung weg vom Antrieb.

Das Ventil weist einen im Gehäusekörper angeordneten zweiten Ventilsitz auf. Der zweite Ventilsitz begrenzt eine zweite Öffnung. Das Ventil weist einen zweiten Schließkörper auf. Der zweite Schließkörper ist zwischen dem ersten Ende und dem zweiten Ende mit dem Stößel verbunden. Der zweite Schließkörper ist mittels einer Bewegung des Stößels zwischen der Offenstellung und der Schließstellung verstellbar. In der Offenstellung gibt der Schließkörper die zweite Öffnung frei. In der Schließstellung dichtet der zweite Schließkörper die zweite Öffnung ab, indem er an dem zweiten Ventilsitz anliegt. Das Ventil weist ein zweites Federelement auf, das an dem Gehäusekörper fixiert ist. Das zweite Federelement ist an dem zweiten Schließkörper fixiert, um eine axiale Federkraft und eine radiale Federkraft auf den zweiten Schließkörper auszuwirken. Das zweite Federelement ist korrespondierend zum ersten Federelement ausgebildet, sodass die im Zusammenhang mit dem ersten Federelement beschriebenen Merkmale und Vorteile auch für das zweite Federelement gelten.

Das beschriebene Ventil eignet sich insbesondere für Linearventile, bei denen der Stößel entlang einer Richtung, insbesondere seiner Längsachse linear bewegt wird. Das Ventil kann als Doppellinearventil ausgebildet sein oder mit nur einem einzigen Schließkörper als Einfachlinearventil. Beim Doppellinearventil wird die zweite Öffnung gleichzeitig zur ersten Öffnung durch die Stößelbewegung verschlossen oder freigegeben.

Beispielsweise ist das Ventil in einem Abgasrückführsystem eines Kraftfahrzeugs einsetzbar, um die Abgasleitung des Kraftfahrzeugs zu öffnen und zu schließen. Beispielsweise weist ein Abgasrückführsystem eines Kraftfahrzeugs das Ventil auf.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente können figurenübergreifend mit den gleichen Bezugszeichen versehen sein.

Es zeigen:
- Figur 1: eine schematische Schnittansicht eines bekannten Ventils, welches zumindest nicht die Merkmale des kennzeichnenden Teils von Anspruch zeigt,
- Figur 2: eine schematische Schnittansicht eines Ventils gemäß einem Ausführungsbeispiel der Erfindung,
- Figur 3: eine schematische Darstellung eines Teils des Ventils gemäß Figur 2,
- Figur 4: eine schematische Darstellung eines Federelements gemäß Figur 2,
- Figur 5: eine schematische Darstellung eines Teils des Ventils gemäß Figur 2,
- Figur 6: eine schematische Darstellung eines Schafts des Ventils gemäß Figur 2,
- Figur 7: schematische Darstellungen eines Verbindungselements des Ventils gemäß Figur 2, und
- Figur 8: verschiedene Ansichten des Ventils gemäß Figur 2.

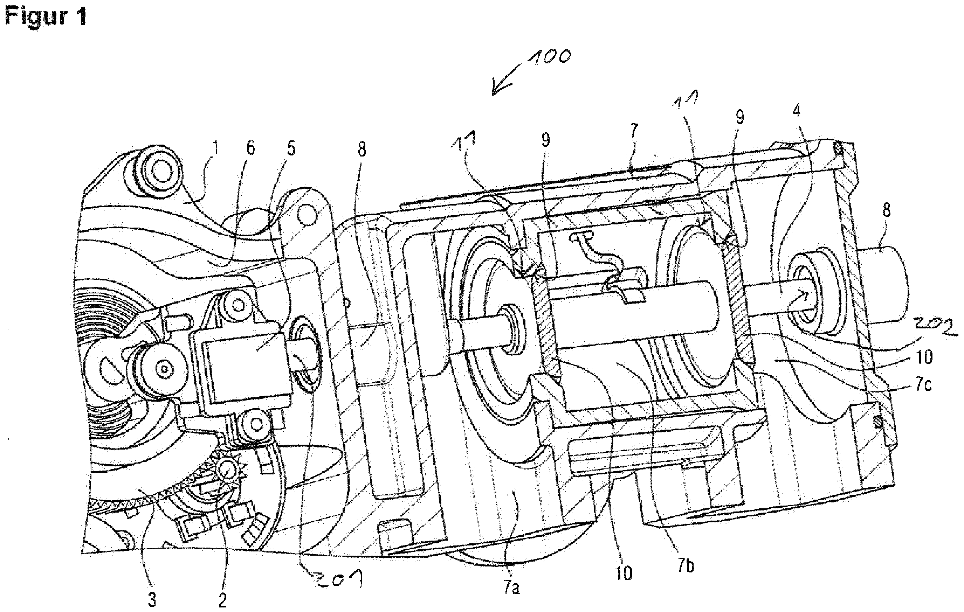

Figur 1 zeigt ein Ventil 100 zum Öffnen und Schließen einer Abgasleitung, welches zumindest nicht die Merkmale des kennzeichnenden Teils von Anspruch 1 zeigt. Das Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4 umgewandelt. Am Getriebe 3 ist ein Sensor 5 angeordnet, der mit einem am Stößel 4 befestigten Magneten zusammenwirkt. Der Stößel 4 erstreckt sich von der Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Schließkörper 10 sind so auf dem Stößel 4 angeordnet, dass sie sich bei einer Bewegung des Stößels 4 entlang einer Längsachse 205 des Stößels 4 an den jeweiligen Ventilsitz 9 anlegen und eine Öffnung 11 abdichten oder vom Ventilsitz 9 wegbewegen und die Öffnung 11 somit freigeben, dass ein Gas von einer Ventilkammer 7 in die andere strömen kann.

Im Folgenden wird ein Ventil 100 gemäß einem Ausführungsbeispiel der Erfindung beschrieben, das eine veränderte Lagerung und Führung für den Stößel 4, gemäß der Ansprüche 1-8, aufweist. Im Übrigen kann das Ventil 100 die Merkmale der anhand von Figur 1 beschriebenen Ausgestaltung aufweisen.

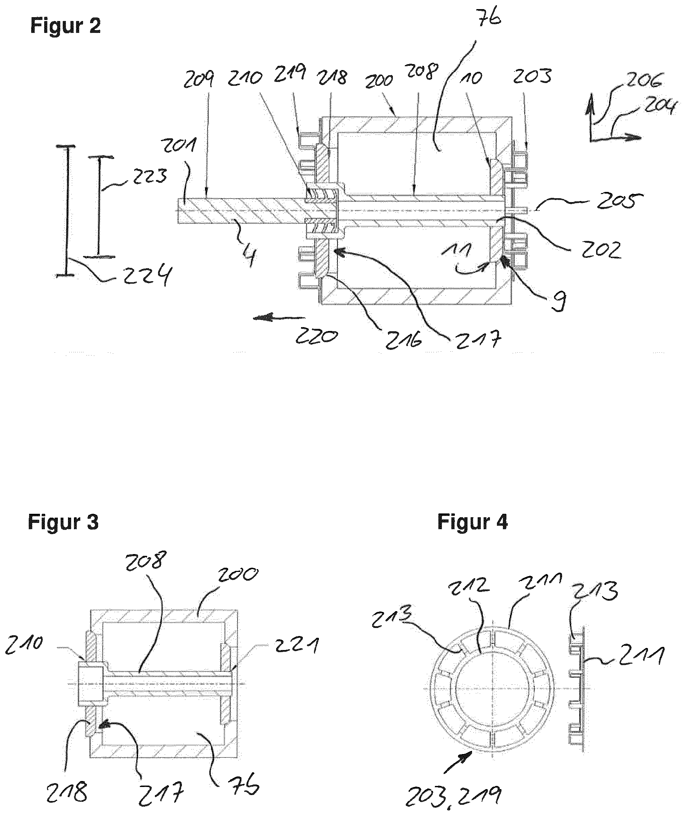

Figur 2 zeigt eine Schnittansicht eines Teils des Ventils 100. Der Stößel 4 erstreckt sich entlang der Längsachse 205 von einem ersten Ende 201 zu einem zweiten Ende 202. Am ersten Ende 201 ist der Stößel 4 mit dem Antrieb koppelbar, also beispielsweise mit dem Getriebe 3. An dem zweiten Ende 202 ist der Schließkörper 10 angeordnet. Zwischen dem ersten Ende 201 und dem zweiten Ende 202 ist ein zweiter Schließkörper 218 angeordnet und an dem Stößel 4 fixiert. Beispielsweise weist der Schließkörper 10 einen ersten Durchmesser 223 auf. Der zweite Schließkörper 218 weist einen zweiten Durchmesser 224 auf. Der zweite Durchmesser 224 ist insbesondere größer als der erste Durchmesser 223. Somit sind die beiden Schließkörper 10, 218 unterschiedlich groß.

Der Schließkörper 10 ist dem Ventilsitz 9 zugeordnet, der in einem Gehäusekörper 200 ausgebildet ist. Der Gehäusekörper 200 umgibt insbesondere die Teilkammer 7b. Auf die Teilkammer 7c (Figur 1) kann in dem erfindungsgemäßen Ventil 100 verzichtet werden. Der Ventilsitz 9 umgibt die Öffnung 11. Der Gehäusekörper 200 weist einen zweiten Ventilsitz 216 auf. Der zweite Schließkörper 218 ist im zweiten Ventilsitz 216 zugeordnet. Der zweite Ventilsitz 216 umgibt eine zweite Öffnung 217. Zum Öffnen des Ventils werden die Schließkörper 10, 218 von den jeweiligen Ventilsitzen 9, 216 in eine Öffnungsrichtung 220 bewegt.

Der Gehäusekörper 200 ist beispielsweise in dem Gehäuse 1 angeordnet und an dem Gehäuse 1 befestigt. Alternativ ersetzt der Gehäusekörper 200 beispielsweise das Gehäuse 1. Der Antrieb ist beispielsweise an dem Gehäusekörper 200 befestigt.

Den Schließkörpern 10, 218 ist ein jeweiliges Federelement 203, 219 zugeordnet, das eine Kraft auf den jeweils zugeordneten Schließkörper 10, 218 entgegen der Öffnungsrichtung 220 auswirkt. Die Federelemente 203, 219 sind somit ausgebildet, eine axiale Federkraft 204 auf die Schließkörper 10, 218 auszuwirken, um das Ventil in der Schließstellung zu halten.

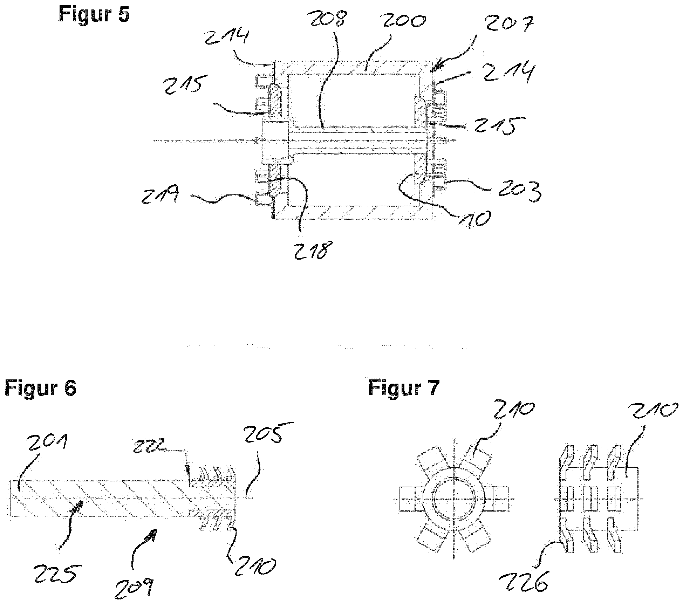

Das Federelement 203 ist an dem Gehäusekörper 200 fixiert, beispielsweise mittels einer Schweißverbindung 214 (Figur 5). Das Federelement 203 ist zudem an dem Schließkörper 10 fixiert, beispielsweise mittels einer Schweißverbindung 215 (Figur 5). Korrespondierend ist das zweite Federelement 219 mittels einer Schweißverbindung 214 mit dem Gehäusekörper 200 verbunden. Das zweite Federelement 219 ist mittels einer Schweißverbindung 215 mit dem zweiten Schließkörper 218 verbunden (Figur 5). Somit ist es möglich, dass die Federelemente 203, 219 Zug- und Druckkräfte zwischen dem Gehäusekörper 200 und den Schließkörpern 10, 218 auswirken.

Zusätzlich zu der axialen Federkraft 204 sind die Federelemente 203, 219 jeweils dazu ausgebildet, eine radiale Federkraft 206 auszuwirken. Somit sind die Schließkörper 10, 218 mittels des jeweiligen Federelements 203, 219 auch radial geführt. Die Schließkörper 10, 218 sind wiederum mit dem Stößel 4 verbunden. Somit ist auch der Stößel 4 mittels der Federelemente 203, 219 relativ zum Gehäusekörper 200 radial geführt. Auf eine zusätzliche Lagerung insbesondere am zweiten Ende 202 kann dadurch verzichtet werden.

Zur Montage des Ventils 100 wird zunächst der Gehäusekörper 200 bereitgestellt. Der Schließkörper 10 wird mittels einer Schweißverbindung 221 an einer Hülse 208 des Stößels 4 befestigt, wie insbesondere in Figur 3 dargestellt ist. Der zweite Schließkörper 218 wird mittels einer Schweißverbindung 221 an der Hülse 208 befestigt. Die Hülse 208 wird mit den Schließkörpern 10, 218 am Gehäusekörper 200 angeordnet. Aufgrund des geringeren Durchmessers 223 des Schließkörpers 10 ist dieser durch die zweite Öffnung 217 hindurch in die Teilkammer 7b einbringbar, die von dem Gehäusekörper 200 umgeben ist.

Figur 4 zeigt eine exemplarische Darstellung der Federelemente 203, 219. Die Federelemente 203, 219 weisen jeweils einen ersten Ring 211 auf. Die Federelemente 203, 219 weisen jeweils einen zweiten Ring 212 auf. Der erste Ring 211 hat einen größeren Durchmesser als der zweite Ring 212. Die beiden Ringe 211, 212 sind koaxial angeordnet. Die beiden Ringe 211, 212 sind mittels Federverbindungen 213 miteinander verbunden. Die Federverbindungen 213 ermöglichen eine Relativbewegung der beiden Ringe 211, 212 relativ zueinander. Zudem ermöglichen die Federverbindungen 213 das Auswirken der axialen Federkraft 204 sowie der radialen Federkraft 206. Der erste Ring 211 ist dazu ausgebildet, mit dem Gehäusekörper 200 verbunden zu werden. Der zweite Ring 212 ist dazu ausgebildet, mit einem der Schließkörper 10, 218 verbunden zu werden.

Figur 5 zeigt die Anordnung der Figur 3 mit zusätzlich montierten Federelementen 203, 219. Die Federelemente 203 sind jeweils an einer Außenseite 207 des Gehäusekörpers 200 mit den jeweiligen ersten Ringen 211 und den Schweißverbindungen 214 verbunden. Die zweiten Ringe 212 sind jeweils mittels der Schweißverbindung 215 mit den jeweiligen zugeordneten Schließkörpern 10, 218 verbunden.

Figur 6 zeigt einen Schaft 209 gemäß einem Ausführungsbeispiel, der Teil des Stößels 4 ist. Der Schaft 209 erstreckt sich länglich ausgedehnt entlang der Längsachse 205. Im betriebsfertigen Zustand bildet der Schaft 209 das erste Ende 201 des Stößels 4 aus. Der Schaft 209 ist insbesondere dazu ausgebildet, mit dem Antrieb des Ventils 100 gekoppelt zu werden. Zudem ist der Schaft 209 mit der Hülse 208 verbindbar. Zum Verbinden mit der Hülse 208 weist der Schaft 209 ein Verbindungselement 210 auf. Das Verbindungselement 210 ist insbesondere mittels einer Schweißverbindung 222 mit einem Schaftkörper 225 verbunden.

Figur 7 zeigt Ansichten des Verbindungselements 210 gemäß einem Ausführungsbeispiel. Das Verbindungselement 210 weist geneigte Vorsprünge 226 auf. Die Vorsprünge sind so geneigt und beispielsweise elastisch ausgebildet, dass sie ein Einschieben entlang der Längsachse 205 entgegen der Öffnungsrichtung 220 in die Hülse 208 ermöglichen. Eine Bewegung des Verbindungselements 210 relativ zu der Hülse 208 in die Öffnungsrichtung 220 wird nachfolgend durch ein Hinterhaken der Vorsprünge 226 in dem Material der Hülse 208 verhindert. Die Vorsprünge 226 dringen beispielsweise leicht in das Material der Hülse 208 ein und fixieren so das Verbindungselement 210 und damit den Schaft 209 axial relativ zu der Hülse 208.

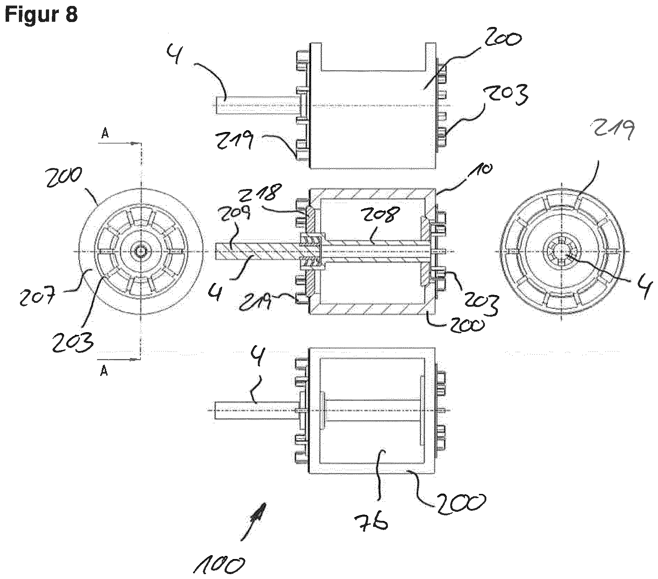

Figur 8 zeigt weitere Ansichten des Ventils 100. Der Stößel 4, der aus den Einzelteilen Schaft 209 und Hülse 208 ausgebildet ist, ist mittels der Federelemente 203 und 219 axial und radial relativ zum Gehäusekörper 200 gehalten. Dadurch ist die Anzahl der Teile des Ventils 100 im Vergleich zu herkömmlichen Ventilen reduziert. Auf eine Extralagerung für das zweite Ende 202 des Stößels 4 kann verzichtet werden. Somit ist auch die Länge des Stößels 4 verringerbar. Dies führt zu geringeren Toleranzen, insbesondere in radialer Richtung.

Die Schließkörper 10, 218 sind beispielsweise auf die Hülse 208 aufgepresst und verschweißt. Die ringförmigen Federelemente 203, 219 sind mit den Schließkörpern 10, 218 verschweißt. Zudem sind die Federelemente 203, 219 mit der Au-βenseite 207 des Gehäusekörpers 2 verschweißt. Der Schaft 209 ist mit dem Verbindungselement 210 in die Hülse 208 eingepresst und eine Selbstverriegelung ausgebildet. Das Verbindungselement 210 ist auf den Schaftkörper 225 aufgepresst und mittels der Schweißverbindung 222 gehalten. Das dargestellte Doppellinearventil, das auch als Ventilmodul bezeichnet werden kann, ist dann mit dem Antrieb koppelbar.

Die Schließkörper 10, 218 sind mittels der jeweiligen Federelemente 203, 219 schwimmend gelagert, sodass stets eine Zentrierung ermöglicht ist. Zudem sind die Schließkörper 10, 218 entgegen der Öffnungsrichtung 220 vorgespannt. Die Federelemente 203, 219 ermöglichen, auf eine Rückstellfeder im Antrieb zu verzichten. Auf eine zusätzliche Halterung für den Stößel 4 am zweiten Ende 202 kann verzichtet werden.

Das Ventil 100 ermöglicht einen einfachen, kompakten, zuverlässigen und kostengünstigen Aufbau eines Ventils zum Öffnen und Schließen von Abgasleitungen.

## Patentansprüche

1. Ventil zum Öffnen und Schließen einer Abgasleitung, aufweisend:
- ein Gehäusekörper (200),
- einen in dem Gehäusekörper (200) angeordneten Stößel (4), der an einem ersten Ende (201) mit einem Antrieb koppelbar ist und ausgebildet ist, entlang einer Längsachse (205) des Stößels (4) bewegt zu werden,
- einen im Gehäusekörper (200) angeordneten Ventilsitz (9) der eine Öffnung (11) begrenzt, und
- einen Schließkörper (10), der mit dem Stößel (4) verbunden ist, so dass der Schließkörper (10) mittels einer Bewegung des Stößels (4) zwischen einer Offenstellung, in der die Öffnung (11) freigegeben ist, und einer Schließstellung verstellbar ist, in der der Schließkörper (10) an dem Ventilsitz (9) anliegt und die Öffnung (11) abdichtet,
- ein Federelement (203), das an dem Gehäusekörper (200) fixiert ist und das an dem Schließkörper (10) fixiert ist, um eine axiale Federkraft (204) und eine radiale Federkraft (206) auf den Schließkörper (10) auszuwirken,
- einen im Gehäusekörper (200) angeordneten zweiten Ventilsitz (216), der eine zweite Öffnung (217) begrenzt, und
- einen zweiten Schließkörper (218), der zwischen dem ersten Ende (201) und dem zweiten Ende (202) mit dem Stößel (4) verbunden ist, so dass der zweite Schließkörper (218) mittels einer Bewegung des Stößels (4) zwischen der Offenstellung, in der die zweite Öffnung (217) freigegeben ist, und der Schließstellung verstellbar ist, in der der zweite Schließkörper (218) an dem zweiten Ventilsitz (216) anliegt und die zweite Öffnung (217) abdichtet, **dadurch gekennzeichnet, dass**
- ein zweites Federelement (219), an dem Gehäusekörper (200) fixiert ist und an dem zweiten Schließkörper (218) fixiert ist, um eine axiale Federkraft (204) und eine radiale Federkraft (206) auf den zweiten Schließkörper (218) auszuwirken und,
dass das Federelement (203) und das zweites Federelement (219) jeweils an einer Außenseite (207) des Gehäusekörpers (200) fixiert sind.

2. Ventil nach Anspruch 1, bei dem der Stößel (4) eine Hülse (208) aufweist, mit der der Schließkörper (1 0) verbunden ist, und bei der der Stößel (4) einen Schaft (209) aufweist, der mit dem Antrieb koppelbar ist und der teilweise in der Hülse (208) angeordnet ist.

3. Ventil nach Anspruch 2, bei dem der Schaft (209) ein Verbindungselement (210) aufweist, das ein Einschieben des Schafts (209) in die Hülse (208) zur Montage ermöglicht und das die Hülse (208) hinterhakt, um den Schaft (209) mit der Hülse (208) zu verbinden.

4. Ventil nach einem der Ansprüche 1 bis 3, beim dem die Federelemente (203, 219) als Tellerfedern ausgebildet sind.

5. Ventil nach einem der Ansprüche 1 bis 4, bei dem die Federelemente (203, 219) jeweils einen ersten Ring (211) und einen zweiten Ring (212) aufweisen, wobei jeweils der erste Ring (211) an dem Gehäusekörper (200) fixiert ist und der zweite Ring (212) an einem der Schließkörper (10, 218) fixiert ist.

6. Ventil nach einem der Ansprüche 1 bis 5, bei die Federelemente (203, 219) an dem Gehäusekörper (200) und an einem der Schließkörper (10, 218) jeweils mittels einer Schweißverbindung (214, 215) fixiert sind

7. Ventil nach einem der Ansprüche 1 bis 6, bei dem der Stößel (4) in der Schließposition an einem dem ersten Ende (201) gegenüberliegenden zweiten Ende (202) in der Öffnung (11) endet.

8. Ventil nach einem der Ansprüche 1 bis 7, bei dem der Schließkörper (10) an dem zweiten Ende (202) mit dem Stößel (4) verbunden ist.

## Claims

1. Valve for opening and closing an exhaust gas line, having:
- a housing body (200),
- a tappet (4) which is arranged in the housing body (200), can be coupled at a first end (201) to a drive, and is configured to be moved along a longitudinal axis (205) of the tappet (4),
- a valve seat (9) which is arranged in the housing body (200) and delimits an opening (11), and
- a closing body (10) which is connected to the tappet (4), with the result that the closing body (10) can be adjusted by means of a movement of the tappet (4) between an open position, in which the opening (11) is released, and a closed position, in which the closing body (10) bears against the valve seat (9) and seals the opening (11),
- a spring element (203) which is fixed on the housing body (200) and which is fixed on the closing body (10), in order to exert an axial spring force (204) and a radial spring force (206) on the closing body (10),
- a second valve seat (216) which is arranged in the housing body (200) and delimits a second opening (217), and
- a second closing body (218) which is connected between the first end (201) and the second end (202) to the tappet (4), with the result that the second closing body (218) can be adjusted by means of a movement of the tappet (4) between the open position, in which the second opening (217) is released, and the closed position, in which the second closing body (218) bears against the second valve seat (216) and seals the second opening (217), **characterized in that**
- a second spring element (219) is fixed on the housing body (200) and is fixed on the second closing body (218), in order to exert an axial spring force (204) and a radial spring force (206) on the second closing body (218), and **in that** the spring element (203) and the second spring element (219) are fixed in each case on an outer side (207) of the housing body (200).

2. Valve according to Claim 1, in the case of which the tappet (4) has a sleeve (208), to which the closing body (10) is connected, and in the case of which the tappet (4) has a stem (209) which can be coupled to the drive and which is arranged partially in the sleeve (208).

3. Valve according to Claim 2, in the case of which the stem (209) has a connecting element (210) which makes it possible to push the stem (209) into the sleeve (208) for assembly purposes and which hooks behind the sleeve (208), in order to connect the stem (209) to the sleeve (208) .

4. Valve according to one of Claims 1 to 3, in the case of which the spring elements (203, 219) are configured as cup springs.

5. Valve according to one of Claims 1 to 4, in the case of which the spring elements (203, 219) in each case have a first ring (211) and a second ring (212), in each case the first ring (211) being fixed on the housing body (200) and the second ring (212) being fixed on one of the closing bodies (10, 218).

6. Valve according to one of Claims 1 to 5, in the case of which the spring elements (203, 219) are fixed on the housing body (200) and on one of the closing bodies (10, 218) in each case by means of a welded connection (214, 215) .

7. Valve according to one of Claims 1 to 6, in the case of which, in the closed position, the tappet (4) ends in the opening (11) at a second end (202) which lies opposite the first end (201).

8. Valve according to one of Claims 1 to 7, in the case of which the closing body (10) is connected at the second end (202) to the tappet (4).

## Revendications

1. Soupape pour l'ouverture et la fermeture d'une conduite de gaz d'échappement, comprenant :
- un corps de boîtier (200),
- un poussoir (4) agencé dans le corps de boîtier (200), qui peut être couplé à une première extrémité (201) avec un entraînement et est configuré pour être déplacé le long d'un axe longitudinal (205) du poussoir (4),
- un siège de soupape (9) agencé dans le corps de boîtier (200), qui délimite une ouverture (11), et
- un corps de fermeture (10), qui est relié avec le poussoir (4), de telle sorte que le corps de fermeture (10) peut être ajusté au moyen d'un déplacement du poussoir (4) entre une position d'ouverture, dans laquelle l'ouverture (11) est dégagée, et une position de fermeture, dans laquelle le corps de fermeture (10) repose sur le siège de soupape (9) et bouche l'ouverture (11),
- un élément ressort (203), qui est fixé au corps de boîtier (200) et qui est fixé au corps de fermeture (10), afin d'exercer une force de ressort axiale (204) et une force de ressort radiale (206) sur le corps de fermeture (10),
- un deuxième siège de soupape (216) agencé dans le corps de boîtier (200), qui délimite une deuxième ouverture (217), et
- un deuxième corps de fermeture (218), qui est relié entre la première extrémité (201) et la deuxième extrémité (202) avec le poussoir (4), de telle sorte que le deuxième corps de fermeture (218) peut être ajusté au moyen d'un déplacement du poussoir (4) entre la position d'ouverture, dans laquelle la deuxième ouverture (217) est dégagée, et la position de fermeture, dans laquelle le deuxième corps de fermeture (218) repose sur le deuxième siège de soupape (216) et bouche la deuxième ouverture (217), **caractérisée en ce que**
- un deuxième élément ressort (219) est fixé au corps de boîtier (200) et est fixé au deuxième corps de fermeture (218), afin d'exercer une force de ressort axiale (204) et une force de ressort radiale (206) sur le deuxième corps de fermeture (218), et
**en ce que** l'élément ressort (203) et le deuxième élément ressort (219) sont chacun fixés à un côté extérieur (207) du corps de boîtier (200).

2. Soupape selon la revendication 1, dans laquelle le poussoir (4) comprend une gaine (208), avec laquelle le corps de fermeture (10) est relié, et dans laquelle le poussoir (4) comprend un arbre (209), qui peut être couplé avec l'entraînement et qui est partiellement agencé dans la gaine (208).

3. Soupape selon la revendication 2, dans laquelle l'arbre (209) comprend un élément de liaison (210), qui permet une insertion de l'arbre (209) dans la gaine (208) pour le montage et qui accroche la gaine (208) par derrière, afin de relier l'arbre (209) à la gaine (208) .

4. Soupape selon l'une quelconque des revendications 1 à 3, dans laquelle les éléments ressorts (203, 219) sont configurés sous la forme de rondelles-ressorts.

5. Soupape selon l'une quelconque des revendications 1 à 4, dans laquelle les éléments ressorts (203, 219) comprennent chacun une première bague (211) et une deuxième bague (212), la première bague (211) étant fixée au corps de boîtier (200) et la deuxième bague (212) étant fixée à un des corps de fermeture (10, 218) .

6. Soupape selon l'une quelconque des revendications 1 à 5, dans laquelle les éléments ressorts (203, 219) sont fixés au corps de boîtier (200) et à un des corps de fermeture (10, 218) à chaque fois au moyen d'une liaison de soudage (214, 215).

7. Soupape selon l'une quelconque des revendications 1 à 6 dans laquelle le poussoir (4) se termine dans l'ouverture (11) dans la position de fermeture au niveau d'une deuxième extrémité (202) opposée à la première extrémité (201).

8. Soupape selon l'une quelconque des revendications 1 à 7, dans laquelle le corps de fermeture (10) est relié au poussoir (4) à la deuxième extrémité (202).
